# FASCICULE DE BREVET EUROPEEN

(11) **EP 2 003 255 B1**
(45) Date de publication et mention de la délivrance du brevet: **15.07.2009**
(21) Numéro de dépôt: 08305246.4
(22) Date de dépôt: 11.06.2008
(51) Int. Cl.: E03B 7/07, G01F 15/18

(54) **Rail de fixation d`un ensemble de comptage d`eau**
Befestigungsschiene einer Wasserzählereinheit
Attachment rail for a water metering assembly

(30) Priorité: 13.06.2007 FR 0755747
(43) Date de publication de la demande: 17.12.2008
(73) Titulaire: SAINTE LIZAIGNE SA, 75008 PARIS (FR)
(72) Inventeur: Verhee, Damien, 36100 Issoudun (FR)
(74) Mandataire: Catherine, Alain

(56) Documents cités:
- DE-A1- 19 716 165
- DE-C- 734 050

## Description

L'invention concerne un rail de fixation d'un ensemble de comptage d'eau comportant des moyens de réglage permettant une adaptation à divers types d'ensemble de comptage. Elle a des applications dans le domaine du génie civil et plus particulièrement de l'adduction d'eau chez des utilisateurs.

Les rails des fixations mis en oeuvre traditionnellement sont des structures rigides qui comportent une partie sensiblement horizontale qui se fixe sur un support de type mur nu ou fini et deux bras perpendiculaires à ses deux extrémités latérales et sur lesquels sont fixés les éléments d'extrémité de l'ensemble de comptage. Ce type de rail est généralement métallique, de préférence inox ou recouvert (peinture par exemple) pour éviter la détérioration par oxydation et/ou électrolyse dans un milieu généralement humide. On a également proposé de mettre en oeuvre des rails réalisés dans une matière plastique ce qui évite les inconvénients précédemment mentionnés.

Outre que les rails métalliques sont relativement coûteux en matière et en réalisation (découpe - emboutissage), qu'ils peuvent présenter des arêtes vives qui sont dangereuses, en général ces rails ne sont adaptés qu'à un ensemble de comptage spécifique, voire à une gamme très limitée d'éléments d'un ensemble de comptage particulier. Des stocks importants de modèles de rails sont donc nécessaires pour pouvoir s'adapter à des ensembles de comptages divers.

Il a été proposé des systèmes modulaires mais ils présentent eux-même des inconvénients propres comme par exemple une complexité de mise en oeuvre, des outils de réglage spécifiques, un encombrement important et des difficultés, voire impossibilité, pour changer les éléments, notamment robinetterie, de l'ensemble de comptage.

Enfin, les rails connus présentent un inconvénient important lié à leur structure de fixation au support. En effet, la partie du rail destinée à venir contre le support est plane et le support ne l'est généralement pas. Il en résulte un positionnement hyperstatique qui génère des contraintes lors de la fixation et serrage du rail sur le support ce qui peut entraîner des déformations du rail et des désaxements des bras.

Le document DE-A-197 16 165 décrit un rail de fixation réglable d'un ensemble de comptage d'eau.

La présente invention propose de remédier notamment aux inconvénients précédemment cités et d'apporter des avantages en termes notamment de simplification de mise en oeuvre, de stabilité, de coût et de réduction de stocks.

Ainsi, la présente invention concerne un rail de fixation d'un ensemble de comptage d'eau, le rail comportant, d'une part, une partie étendue en longueur dite platine pouvant être fixé sur un support par une face support de ladite platine et, d'autre part, deux bras latéraux pour fixation amont et aval respectivement de l'ensemble de comptage, lesdits bras étant étendus sensiblement perpendiculairement par rapport à la platine coté face comptage de ladite platine, la face support et la face comptage de la platine étant opposées.

Selon l'invention, au moins un des bras latéraux est déplaçable en translation le long de la platine afin de pouvoir régler l'écartement entre les deux bras, le bras déplaçable faisant partie d'une pièce en équerre qui lorsqu'elle est en place prend un premier appui sur la face comptage et un second appui sur la face support de la platine, le premier et le second appuis étant décalés longitudinalement le long de la platine.

Dans divers modes de mise en oeuvre de l'invention, les moyens suivants pouvant être utilisés seuls ou selon toutes les combinaisons techniquement possibles, sont employés :
- sur la longueur de la platine, le premier appui est plus externe que le second appui, (c'est-à-dire que sur la longueur de la platine, le second appui est plus vers le milieu de la platine que le premier qui est plus vers une des extrémités de ladite platine)
- au moins un des appuis comporte des moyens complémentaires d'indexation permettant de bloquer la translation de la pièce en équerre une fois la position souhaitée atteinte,
- les moyens d'indexation sont à crantages,
- le premier appui comporte les moyens d'indexation qui sont à crantages,
- le second appui comporte les moyens d'indexation qui sont à crantages,
- les moyens d'indexation sont au niveau du premier appui entre une extrémité inférieure du bras et la face de comptage de la platine,
- la pièce en équerre comporte une aile centrale étendue longitudinalement entre le bras et le second appui par l'intérieur de la platine, ladite platine comportant une ouverture centrale longitudinale dans laquelle ladite aile peut circuler,
- les moyens d'indexation sont au niveau du second appui entre une extrémité d'indexation de l'aile et la face de comptage de la platine,
- le second appui est dédoublé respectivement le long de chacun des deux bords latéraux sur la face inférieure de la platine, la pièce en équerre comportant deux ailes latérales chacune étendue longitudinalement entre le bord correspondant du bras et le second appui dédoublé correspondant par l'extérieur de la platine,
- les moyens d'indexation sont au niveau d'un des seconds appuis dédoublés des deux ailes latérales,
- les moyens d'indexations à crantages sont au niveau de chacun des seconds appuis dédoublés des deux ailes latérales,
- les moyens d'indexations à crantages sont au niveau de chacun des seconds appuis dédoublés des deux ailes latérales,
- les deux bras latéraux sont déplaçables,
- la partie correspondant au second appui de la pièce en équerre comporte en outre coté support des moyens de type pied permettant à ladite partie de s'appuyer sur le support une fois le rail fixé sur ledit support,
- le rail (platine + bras) est dans une matière thermoplastique moulable,
- la matière thermoplastique est choisie pour sa résistance aux efforts mécaniques et est éventuellement combiné avec une ou des matières de renforcement, (par exemple des fibres),
- la matière thermoplastique est choisie parmi notamment le polypropylène, le polyoxyméthylène (POM) ou le polyamide,
- la platine est une pièce pleine,
- la platine est une pièce creuse comportant un nervurage interne de renforcement,
- le nervurage est coté face support de la platine,
- le rail est dans une matière thermoplastique moulable et la platine est une pièce creuse comportant un nervurage interne de renforcement coté face support,
- l'extrémité supérieure du bras comporte une ouverture en U ouvert vers le haut pour passage et fixation des éléments de l'ensemble de comptage,
- le bras vers son extrémité supérieure comporte un orifice circulaire pour passage et fixation des éléments de l'ensemble de comptage,
- une (deux dans le mode à deux bras latéraux réglables) pièce en équerre d'une hauteur déterminée est (sont) utilisée, choisie à partir d'un ensemble de pièces en équerres de hauteur de bras différentes,
- le rail ne comporte pas d'arête vive,
- la platine comporte face comptage des graduations sous forme de repères visibles permettant de déterminer l'écartement entre les deux bras en fonction de la position de chaque bras déplaçable par rapport à ses repères,
- la platine comporte au moins deux ouvertures pour passage de moyens de fixation (type vis, rivet ou autre équivalent) de la platine sur le support.

Le rail de l'invention est une structure modulable qui permet de nombreuses possibilités de montage. Par exemple des assemblages différents de robinetteries et compteur avec des longueurs différentes peuvent être montés grâce au réglage d'écartement et à la possibilité de mettre en oeuvre des bras de hauteurs différentes et des équerres avec des ouvertures différentes.

La présente invention, sans qu'elle en soit pour autant limitée, va maintenant être exemplifiée avec la description qui suit en relation avec les figures suivantes, d'un mode préféré de réalisation:
les Figures 1A, 1B et 1C qui sont des vues d'une platine respectivement latérale, de dessus (face comptage) et de dessous (face support),
les Figures 2A, 2B, 2C et 2D qui sont des vues d'une pièce en équerre respectivement de dos ou externe, latérale, de face ou interne et de dessus,
les Figures 3A et 3B qui sont des vues d'un rail respectivement latérale et de dos (ou externe), et
les Figures 4A et 4B qui sont des vues perspectives respectivement d'un rail et d'une pièce en équerre.

L'exemple préféré présenté dans le détail est un rail qui met en oeuvre à chaque extrémité de la platine 1 une pièce en équerre 10 comportant deux ailes latérales 12 partant sur les bords latéraux du bras 11 de réception d'éléments de l'ensemble de comptage. On n'a pas détaillé ici le mode de réalisation à une seule aile partant longitudinalement de la partie médiane du bras et qui peut circuler dans une ouverture centrale de la platine.

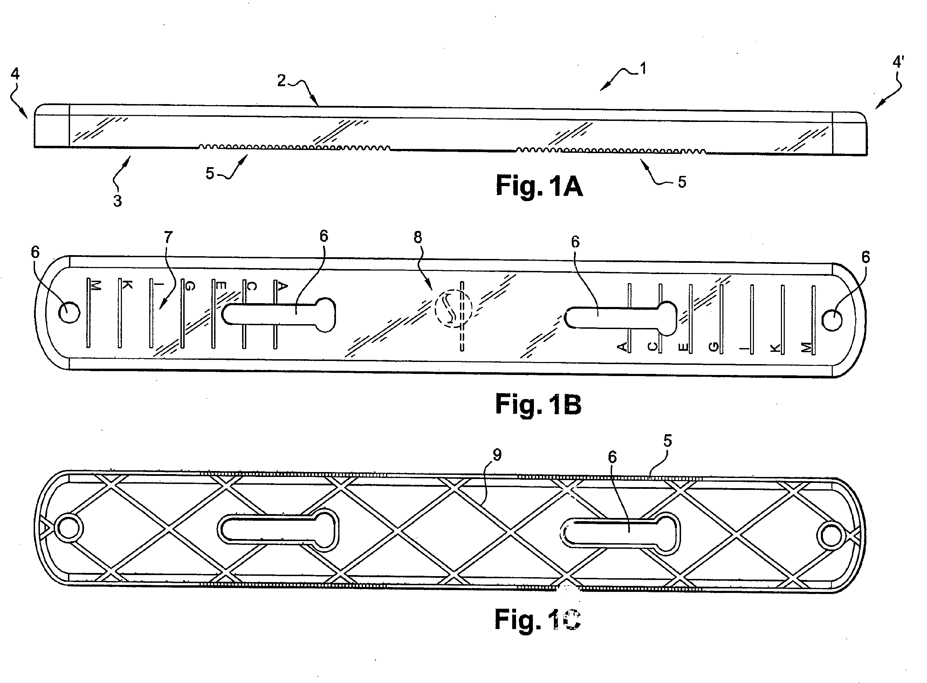

Sur la Figure 1A, la platine 1 destinée à être fixée sur un support, par exemple un mur maçonné d'une cave à l'arrivée de la conduite d'adduction d'eau, est un élément allongé sensiblement parallélépipédique, peu épais par rapport à ses autres dimensions. La platine comporte une face support 3, du coté du support (c'est à dire du côté destiné à venir former un « deuxième appui » appui des équerres et la surface d'appui des éléments de serrage), une face comptage 2, destiné à former un « premier » appui de l'équerre venant en relation avec l'ensemble de comptage à venir en relation avec l'ensemble de comptage et deux extrémités latérales 4 et 4'. Comme on peut mieux le voir sur les Figures 1B et 1C, la platine 1 comporte également, coté face support, une première partie 5 des moyens d'indexation à type de crantages le long des bords externes de ladite platine. Des repères visibles 7 sont répartis face comptage qui est sensiblement plane et comporte ici des indications 8 visuelles référençant le produit. La platine est essentiellement creuse et des nervures 9 sont disposées coté face support afin de la renforcer. Enfin, des orifices traversant 6 permettent le passage de vis (ou autre moyen équivalent) de fixation de la platine sur le support.

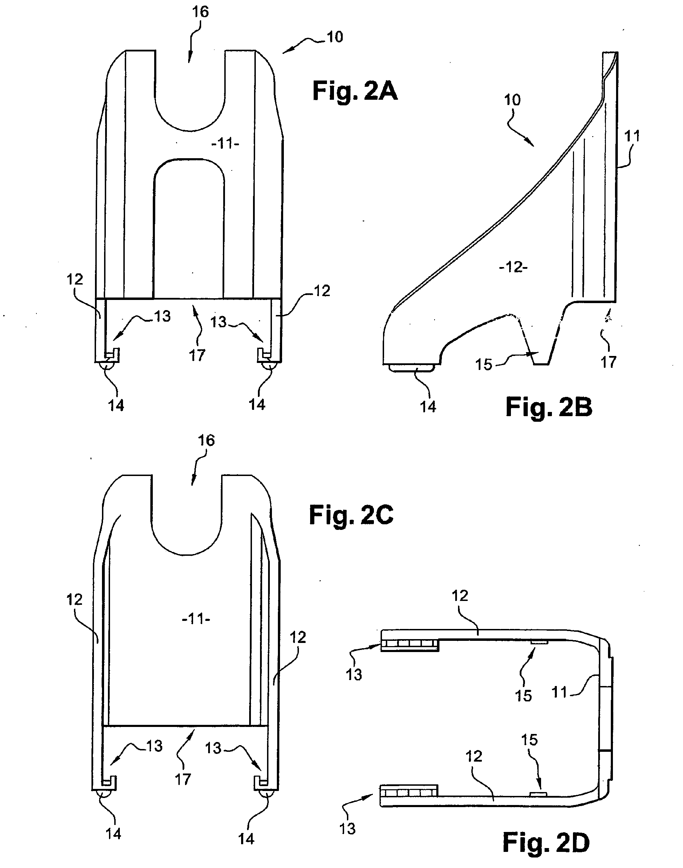

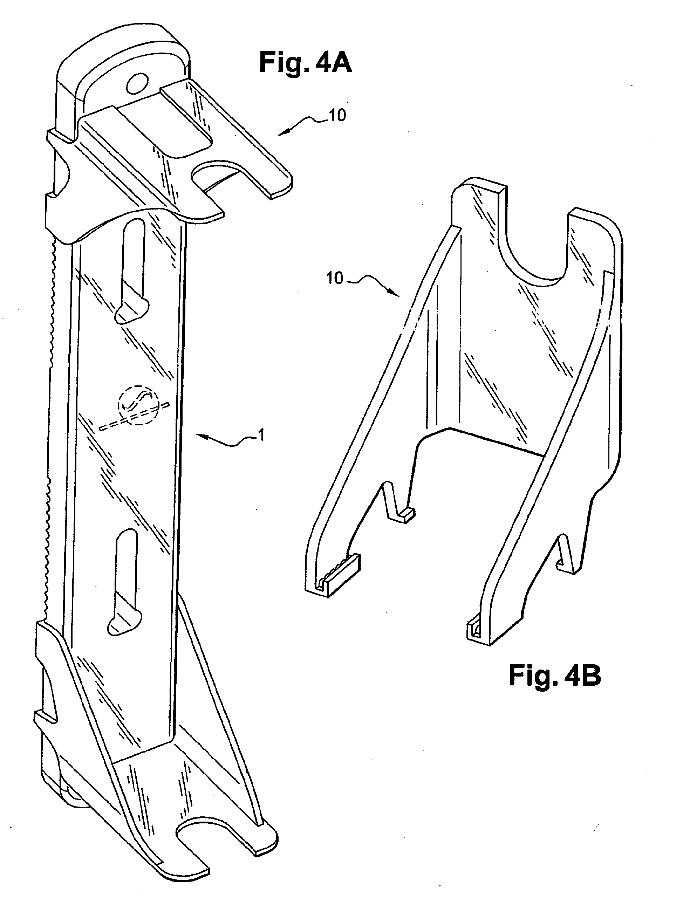

La pièce en équerre 10 des Figures 2A, 2B, 2C et 2D comporte un bras 11 avec une échancrure ou ouverture 16 dans laquelle des éléments de l'ensemble de comptage peuvent être fixés. Ce bras est sensiblement perpendiculaire à la platine lorsque la pièce en équerre est mise en place à la position souhaitée le long de la platine et l'ensemble (platine + pièce en équerre) fixé sur le support. Le long des deux bords latéraux du bras 11 partent longitudinalement deux ailes 12 qui s'étendent à distance vers chacune un moyen d'appui (le second, ici dédoublé du fait de la présence de deux ailes, selon la terminologie employée) entre pièce en équerre et face support de la platine, comportant la seconde partie 13 des moyens d'indexation à type de crantages destiné à venir en relation avec ceux complémentaires 5 de la platine 1. Lorsque la pièce en équerre est mise en place à la position souhaitée le long de la platine et l'ensemble (platine + pièce en équerre) fixé sur le support, la partie inférieure 17 du bras 11 forme également un moyen d'appui (le premier selon la terminologie employée) entre bras et face comptage de la platine. Des pieds 14 sont réalisés coté support de l'extrémité des ailes formant second appui afin que le rail en place repose par lesdits pieds sur le support et bloque ainsi complètement en translation les pièces en équerre 10 sur la platine 1. Des pattes 15 en L (optionnelles) prolongeant vers le bas les ailes 12 assurent un meilleur maintien de la pièce en équerre sur la platine avant la fixation définitive en évitant que ces éléments ne se désolidarisent trop facilement. La Figure 4B donne une vue perspective de la pièce en équerre.

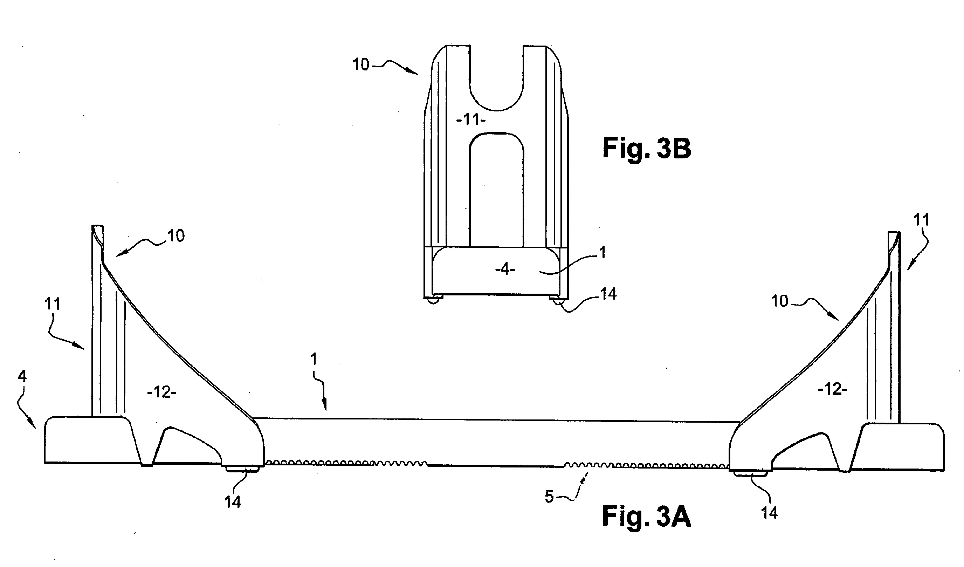

Les Figures 3A et 3B ainsi 4A rendent comptent des relations entre les deux pièces en équerre 10 et la platine 1 lorsque celles-ci sont positionnées à leurs emplacements souhaités et le rail fixé sur un support. On comprend que le réglage d'écartement des deux bras 1 1 , donc des deux pièces en équerre 10, doit se faire avant que la platine 1 ne soit montée sur le support ou si elle est montée, avant qu'elle ne soit serrée afin de laisser un espace libre entre les pieds 14 et le support et de permettre le basculement vers l'intérieur de la pièce en équerre et le déblocage du crantage. Une fois la platine serrée sur le support, les pieds 14 sont appliqués sur le support et les crantages 5 et 13 engagés entre-eux empêchant ainsi tout déplacement en translation de la pièce en équerre. On comprend que les dimensions (hauteurs notamment) et dispositions des premier (coté face comptage) et second (coté face support) appuis, des pieds 14 ainsi que des pattes 15 optionnelles sont adaptées pour permettre cette translation lorsque la platine n'est pas en place ou serrée sur le support, et le blocage en translation, bras sensiblement perpendiculaires à la platine et parallèles entre-eux, lorsque la platine (le rail) est serrée sur le support.

La platine et les pièces en équerre sont réalisées par moulage de matière plastique. On peut, pour une même platine, disposer de plusieurs gammes de pièces en équerre, notamment avec des ouvertures 16 de types différents (fermées - en O - ou ouvertes - en U - le long de leur pourtour), des hauteurs de bras différentes... Le rail peut être livré pré-monté, c'est-à-dire pièces en équerres insérées aux extrémités de la platine ou non.

On comprend que l'invention peut être déclinée selon de nombreuses formes et modalités sans pour autant sortir du cadre défini par les revendications.

## Revendications

1. Rail de fixation d'un ensemble de comptage d'eau, le rail comportant, d'une part, une partie étendue en longueur dite platine (1) pouvant être fixé sur un support par une face support (3) de ladite platine et, d'autre part, deux bras latéraux (11) pour fixation amont et aval respectivement de l'ensemble de comptage, lesdits bras étant étendus sensiblement perpendiculairement par rapport à la platine coté face comptage (2) de ladite platine, la face support et la face comptage de la platine étant opposées, et
au moins un des bras latéraux est déplaçable en translation le long de la platine afin de pouvoir régler l'écartement entre les deux bras, **caractérisé en ce que** le bras déplaçable fait partie d'une pièce en équerre (10) qui lorsqu'elle est en place prend un premier appui (17) sur la face comptage (2) et un second appui (13) sur la face support (3) de la platine, le premier et le second appuis étant décalés longitudinalement le long de la platine.

2. Rail selon la revendication 1 , **caractérisé en ce que** sur la longueur de la platine, le premier appui est plus externe que le second appui.

3. Rail selon la revendication 1 ou 2, **caractérisé en ce qu'**au moins un des appuis comporte des moyens complémentaires d'indexation permettant de bloquer la translation de la pièce en équerre une fois la position souhaitée atteinte.

4. Rail selon la revendication 3, **caractérisé en ce que** le second appui comporte les moyens d'indexation qui sont à crantages.

5. Rail selon l'une quelconque des revendications précédentes, **caractérisé en ce que** le second appui est dédoublé respectivement le long de chacun des deux bords latéraux sur la face inférieure de la platine, la pièce en équerre comportant deux ailes latérales (12) chacune étendue longitudinalement entre le bord correspondant du bras (11) et le second appui (13) dédoublé correspondant par l'extérieur de la platine.

6. Rail selon les revendications 4 et 5, **caractérisé en ce que** les moyens d'indexations à crantages sont au niveau de chacun des seconds appuis dédoublés des deux ailes latérales.

7. Rail selon l'une quelconque des revendications précédentes, **caractérisé en ce que** les deux bras latéraux sont déplaçables.

8. Rail selon l'une quelconque des revendications précédentes, **caractérisé en ce que** la partie correspondant au second appui de la pièce en équerre comporte en outre coté support des moyens de type pied (14) permettant à ladite partie de s'appuyer sur le support une fois le rail fixe sur ledit support.

9. Rail selon l'une quelconque des revendications précédentes, **caractérisé en ce qu'**il est dans une matière thermoplastique moulable et la platine est une pièce creuse comportant un nervurage (9) interne de renforcement coté face support.

10. Rail selon l'une quelconque des revendications précédentes, **caractérisé en ce que** la platine comporte face comptage des graduations sous forme de repères visibles (7) permettant de déterminer l'écartement entre les deux bras en fonction de la position de chaque bras déplaçable par rapport à ses repères.

## Claims

1. Attachment rail for a water metering assembly, the rail comprising, on the one hand, an elongated part called a plate (1) that can be fastened to a support through a support-side face (3) of said plate and, on the other hand, two side arms (11) for upstream and downstream attachment, respectively, of the metering assembly, said arms extending substantially perpendicular to the plate on the side of the meter-side face (2) of said plate, the support-side face and the meter-side face of the plate being opposed to each other, and at least one of the side arms being moveable in translation along the plate so as to adjust the spacing between the two arms, **characterized in that** the moveable arm is a part of an angle bracket (10) which, once in place, has a first rest (17) on the meter-side face (2) and a second rest (13) on the support-side face (3) of the plate, the first and second rests being longitudinally offset along the plate.

2. Rail according to claim 1, **characterized in that,** along the length of the plate, the first rest is located more outwardly than the second rest.

3. Rail according to claim 1 or 2, **characterized in that** at least one of the rests comprises complementary indexing means for locking the angle bracket in translation once the required position is achieved.

4. Rail according to claim 3, **characterized in that** the second rest comprises the indexing means, which are of the cogged type.

5. Rail according to any one of the preceding claims, **characterized in that** the second rest is split in two along each of the two side edges on the lower face of the plate, respectively, the angle bracket comprising two side wings (12) each extending longitudinally between the corresponding edge of the arm (11) and the corresponding split second rest (13), by the outside of the plate.

6. Rail according to claims 4 and 5, **characterized in that** the cogged indexing means are located at each of the split second rests of the two side wings.

7. Rail according to any one of the preceding claims, **characterized in that** the two side arms are moveable.

8. Rail according to any one of the preceding claims, **characterized in that** the part corresponding to the second rest of the angle bracket further comprises, on the support side, foot means (14) enabling said part to lean on the support once the rail is fastened on said support.

9. Rail according to any one of the preceding claims, **characterized in that** it is made of a mouldable thermoplastic material and the plate is a hollow element comprising strengthening inner ribbing (9) on the support-side face.

10. Rail according to any one of the preceding claims, **characterized in that** the plate comprises on the meter-side face a scale in the form of visible marks (7) for determining the spacing between the two arms according to the position of each moveable arm relative to its marks.

## Patentansprüche

1. Befestigungsschiene für eine Wasserzähleinrichtung, wobei die Schiene einerseits ein als Platine (1) bezeichnetes langgestrecktes Teil, das mittels einer Stützfläche (3) der Platine an einer Stütze anbringbar ist, und andererseits zwei seitliche Arme (11) zur stromaufwärtigen bzw. stromabwärtigen Befestigung der Zähleinrichtung aufweist, wobei sich die Arme im Wesentlichen senkrecht zu der Platine von der Zählfläche (2) der Platine aus erstrecken, wobei die Stützfläche und die Zählfläche der Platine zueinander entgegengesetzt sind, und wobei mindestens einer der seitlichen Arme in Längsrichtung entlang der Platine verschiebbar ist, um den Abstand zwischen den beiden Armen einzustellen,
**dadurch gekennzeichnet, dass**
der verschiebbare Arm Teil eines Winkelstücks (10) ist, das, wenn es platziert ist, eine erste Abstützeinrichtung (17) an der Zählfläche (2) und eine zweite Abstützeinrichtung (13) an der Stützfläche (3) der Platte aufweist, wobei die erste und die zweite Abstützeinrichtung in Längsrichtung der Platte zueinander versetzt sind.

2. Schiene nach Anspruch 1, **dadurch gekennzeichnet, dass** die erste Abstützeinrichtung in bezug auf die Länge der Platte weiter außen liegt als die zweite Abstützeinrichtung.

3. Schiene nach Anspruch 1 oder 2, **dadurch gekennzeichnet, dass** mindestens eine der Abstützeinrichtungen komplementäre Indexiereinrichtungen aufweist, welche die Längsverschiebung des Winkelstücks blockieren, sobald die gewünschte Position erreicht ist.

4. Schiene nach Anspruch 3, **dadurch gekennzeichnet, dass** die zweite Abstützeinrichtung gezahnte Indexiereinrichtungen aufweist.

5. Schiene nach einem der vorhergehenden Ansprüche, **dadurch gekennzeichnet, dass** die zweite Abstützeinrichtung jeweils entlang der beiden Seitenränder an der Unterseite der Platte geteilt ist, wobei das Winkelstück zwei seitliche Schenkel (12) aufweist, die sich jeweils in Längsrichtung zwischen dem entsprechenden Rand des Arms (11) und der entsprechenden geteilten zweiten Abstützeinrichtung (13) auf der Außenseite der Platte erstrecken.

6. Schiene nach den Ansprüchen 4 und 5, **dadurch gekennzeichnet, dass** die gezahnten Indexiereinrichtungen sich in Höhe jeder geteilten der zweiten Abstützeinrichtungen der beiden seitlichen Schenkel befinden.

7. Schiene nach einem der vorhergehenden Ansprüche, **dadurch gekennzeichnet, dass** die beiden seitlichen Arme verschiebbar sind.

8. Schiene nach einem der vorhergehenden Ansprüche, **dadurch gekennzeichnet, dass** der Teil, welcher der zweiten Abstützeinrichtung des Winkelstücks entspricht, ferner auf der Stützseite Einrichtungen (14) nach Art eines Fußes aufweist, die es diesem Teil ermöglichen sich an der Stütze abzustützen, wenn die Schiene an der Stütze angebracht ist.

9. Schiene nach einem der vorhergehenden Ansprüche, **dadurch gekennzeichnet, dass** sie aus einem formbaren thermoplastischen Material besteht und die Platte ein hohles Teil ist, das auf der Stützfläche mit einer inneren Verstärkungsverrippung (9) versehen ist.

10. Schiene nach einem der vorhergehenden Ansprüche, **dadurch gekennzeichnet, dass** die Platte auf der Zählfläche eine Einteilung in Form sichtbarer Markierungen (7) aufweist, welche die Bestimmung des Abstandes zwischen den beiden Armen je nach der Position jedes der verschiebbaren Arme in bezug auf die Markierungen ermöglicht.
